# EUROPEAN PATENT SPECIFICATION

(11) **EP 2 384 306 B1**
(45) Date of publication and mention of the grant of the patent: **13.03.2013**
(21) Application number: 08702383.4
(22) Date of filing: 09.01.2008
(51) Int. Cl.: B65G 17/36, B65G 47/96, B07C 5/342

(54) **CONVEYING DEVICE IN MACHINES FOR GRADING FRUIT AND VEGETABLE PRODUCTS**
FÖRDERVORRICHTUNG IN MASCHINEN ZUM KLASSIFIZIEREN VON OBST UND GEMÜSE
DISPOSITIF DE TRANSPORT POUR MACHINE DE TRI DE FRUITS ET DE LÉGUMES

(30) Priority: 11.01.2007 IT BO20070011
(43) Date of publication of application: 09.11.2011
(73) Proprietor: Longobardi s.r.l., 39011 Lana (BZ) (IT)
(72) Inventor: DI MAURO, Vittorio, 47025 Mercato Saraceno (IT); ZANELLI, Raffaele, 47023 Cesena (IT)
(74) Representative: Schiavone, Cristina
(86) International application number: PCT/IB2008/050061
(87) International publication number: WO 2008/084446

(56) References cited:
- EP-A- 1 469 301
- JP-A- 6 288 903
- JP-A- 2006 337 255
- US-A1- 2003 035 108

## Description

### Technical Field

The present invention relates to a conveying device intended to be used in apparatuses for sizing and grading fruit and vegetable products, according to the preamble of claim 1, as disclosed in US-A-2003/0035108.

### Background Art

It is known that in order to operate the sizing and grading of fruit and vegetable products and the like, such as for instance apples, melons, peaches and other types of fruit, generally rounded-shaped, automatic apparatuses have been set up, able to grade the said products according to appropriate parameters of size, of shape and of weight.

Such apparatuses generally include a conveyor, usually consisting of chain means adequately motorized, along which a plurality of means are arranged in sequence, in order to support the products to grade. Through these support means, the products are conveyed in sequence through a plurality of stations where detection means of the features of the products operate.

According to a known solution, the support devices are equipped with means to contain the products, which are cup- or pan-shaped, in order to receive the individual article and keep it in the same position during the transport. Support devices of this type are illustrated for instance in the Italian patent N. 01257787 in the name of the Applicant.

It is likewise known that some techniques of analysis of the internal quality of the fruit and vegetable products have been developed. These techniques allow to operate on-line the control of certain quality parameters necessary for the grading of the said products, such as the sugary content, the acidity degree, the ripening level, the hardness of the products, or to highlight possible inner defects. In particular, it is know to this aim, in the specific field, the use of the technology called NIR (Near Infra-Red) based on a near infra-red spectrography to perform the quality control in said apparatuses for sizing and grading the products.

The NIR (Near Infra-Red) technology basically consists in colliding with the fruit to control a light beam emitted by a halogen light source and therefore detecting, through a suitable sensor, the composition of the residual light that has passed through reflectance or through transmittance the same fruit. The luminous spectrum of the near infrared detected by the sensor is analyzed by a suitable spectrograph that, on the basis of a program managed by a processor, provides the said quality parameters.

The use of the cited technique in the specified field is illustrated, for instance, in patents EP 0981744, EP 1285244, EP 1679496 and US 6847447.

The use of the cited technique through reflectance is easier but not sufficiently accurate. The use of the same technique through transmittance is, on the contrary, preferable for its higher accuracy, due to the fact that only the light filtered by the product is analyzed. This use is, though, difficult in the apparatuses for sizing and grading fruit and vegetable products of the traditional type, mainly because of the physical constraints determined by the set-up of the conveyor. In particular, the shape of the known means to support the products and the arrangement of the chain means underneath them, along the median longitudinal axis, is an obstacle for a correct reception of the light beam by the sensor.

### Disclosure of Invention

### Disclosure

The aim of the present invention is to overcome the cited drawback by devising a conveying device, which allows carrying out in a simple and effective way the quality control through the NIR (Near Infra-Red) technique in the apparatuses for grading fruit and vegetable products.

Within this duty, it is a further aim of the invention to provide a conveying device easily applicable in apparatuses for grading fruit and vegetable products of the traditional type.

Another aim of the invention is to provide a conveying device of simple constructive and functional conception, equipped with a certainly reliable functioning, versatile in [12] use, as well as of relatively economic costs.

The cited aims are achieved, according to the present invention, by the transport device in apparatuses for grading fruit and vegetable products, as stated in the appended claim 1.

### Description of Drawings

Description details of the invention will be further evident in the detailed illustration of a preferred embodiment of the conveying apparatus according to the invention, illustrated in the attached guideline drawings, wherein:

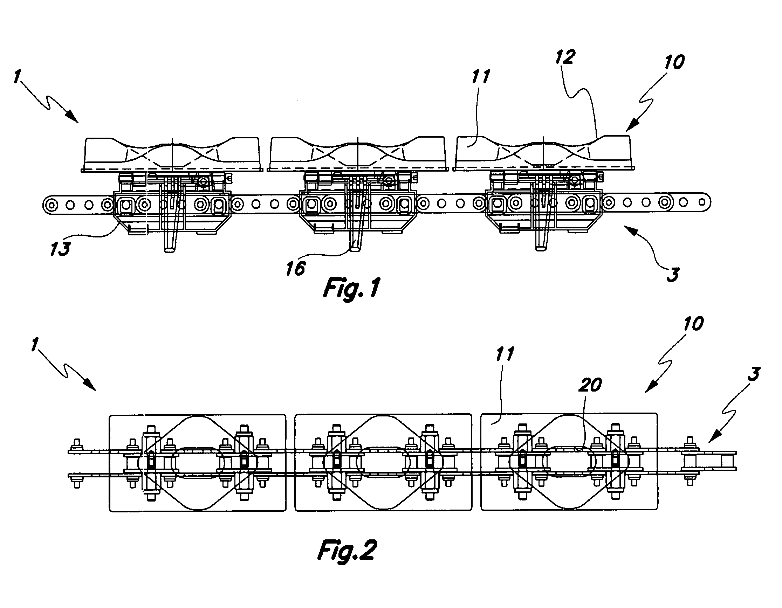

Fig. 1 illustrates a side view of a part of the conveying device;

Fig. 2 illustrates its corresponding plan view;

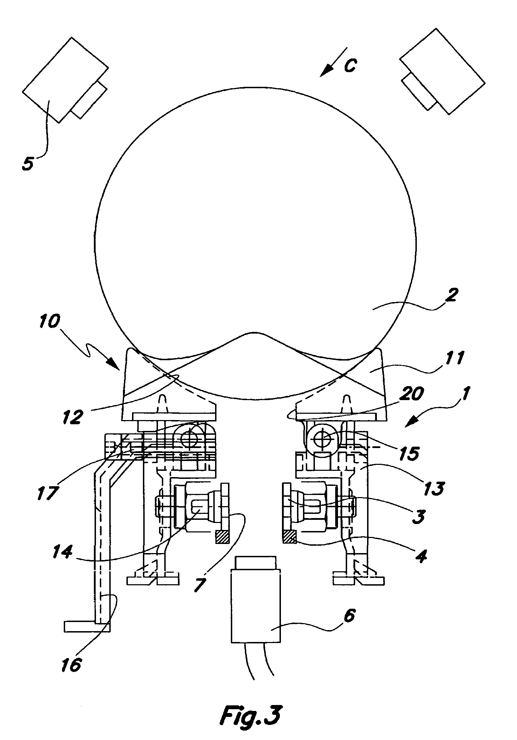

Fig. 3 illustrates a cross-section view of the conveying device.

### Best Mode

With reference to such figures, 1 refers to a conveyor of the fruit and vegetable products 2 in an apparatus for sizing and grading said fruit and vegetable products. The conveyor 1 is developed in a known way along a substantially horizontal direction and is equipped with haul-off units 3 of a plurality of means 10 to support the products 2, arranged regularly spaced in mutually adjacent positions and suited to convey the same products 2 at least at one quality control station C through near infrared spectrography, otherwise called NIR (Near Infra-Red).

The support means 10 respectively consist of a cup 11 having a central cavity 12 to contain an individual product 2. The cup 11 is supported by a frame 13 above the haul-off units 3. The haul-off units 3 consist of a chain arranged in a position longitudinally median to the support means 10, borne skating on a slide guide 4. The frame 13 is constrained to the links of chain 3 through suitable clamping screw members 14.

The cup 11 is swivelling constrained to the frame 13 through a hinge 15 with longitudinal axis, arranged on one side of the same frame 13, suited to allow the lateral overturning of the cup 11 through a rotation imparted by an overturning lever 16. The overturning lever 16 of the cup 11 has fulcrum on the frame 13 by a further hinge 17 having axis transversal to the chain 3.

According to the present invention, the central cavity 12 of the cup 11 of the support means 10 has, at the bottom, a feed-through opening 20, preferably consisting of a long and narrow slot along the longitudinal axis of the same cup 11.

As better explained below, the slot 20 of the cup 11 is intended to allow the passage of a light beam that passes through transmittance the product 2 placed resting in the central cavity 12 of the cup 11. This light beam is emitted by at least one light source 5 arranged above the conveyor 1 by the quality control station C of the products 2. Preferably it is foreseen to use two light sources 5, arranged symmetrically on the two sides of the conveyor 1.

The residual light that has passed through the product 2 is detected by a suitable fibre-optic sensor 6 placed underneath the conveyor 1, by the quality control station C of the products 2, basically vertically aligned with the median longitudinal plane of the chain 3. The luminous spectrum of the near infrared detected by the sensor 6 is analyzed in a known way by a suitable spectrograph that, on the basis of a program managed by a processor, provides the required quality parameters of the product 2.

To allow the passage of the light beam to the sensor 6, the slot 20 of each cup 11 is arranged vertically aligned with a respective void 7 defined between two contiguous links of the chain 3.

The functioning of the transport device object of the invention is easily understandable from the description above.

The products 2 to grade are placed in the cavity 12 of the cup 11 of respective support means 10 of the conveyor 1, which provides for conveying them in sequence through the operational stations of the apparatus.

By the quality control station C, the individual products 2 are collided with the light beam emitted by the light sources 5 arranged above the conveyor 1. This light beam passes through the product 2 through transmittance and the residual light is detected by the sensor 6 below. The luminous spectrum of the near infrared detected by the sensor 6 is analyzed by the spectrograph that, on the basis of a suitable program managed through processor, provides the required quality parameters of the fruit, such as the sugary content, the acidity degree, the ripening level, the hardness of the products, the presence of possible inner defects.

It has to be pointed out the fact that the passage of the light beam from the light sources 5 to the sensor 6 below is made possible by the presence of the slot 20 obtained at the bottom of the cavity 12 of the cup 11 of the support means 10 and arranged vertically aligned with a corresponding void 7 defined between two contiguous links of the chain 3, in order to create a sort of open groove underneath the fruit. When it passes in the quality control station C, this open groove aligns itself with the sensor 6 below, for the time necessary for the reading of the light that has passed through the fruit.

Adequately, to allow the reading only of the light that has passed through the fruit, the cavity 12 of the cup 11 of the support means 10 is trimmed with a suitable elastic seal, not illustrated, suited to maintain the tightness against the fruit avoiding the light to infiltrate between the fruit itself and the cup 11, thus altering the reading by the sensor 6. The seal has annular shape developed around the slot 20. Clearly, it is possible to provide that the same light-proof effect is instead realized by the same body of the cup 11, through a suitable material or an insert.

The transport means described achieves therefore the aim to realize in a simple and effective way the quality control of fruit and vegetable products through the known NIR (Near Infra-Red) technique through transmittance, in apparatuses for grading such products.

This result is surprisingly achieved thanks to the presence of the slot 20 obtained at the bottom of the cavity 12 of the cup 11 of the support means 10 in correspondence with a void 7 defined among the links of the chain 3, in order to create a sort of open groove under the product 2 to grade, in order to allow the passage of the light in the quality control station C.

A prerogative of the transport means object of the invention consists in the fact that it can easily be applied to the apparatuses for grading fruit and vegetable products of the traditional type.

In particular, a specific advantage of the transport device object of the invention is that it can be applied to apparatuses for grading fruit and vegetable products having chain haul-off units 3 on a longitudinal plane median to the conveyor 1. The solution according to the present invention allows, in fact, accomplishing the control of the product through the known NIR (Near Infra-Red) technique through transmittance at the said longitudinal plane median to the conveyor 1 even in the presence of the chain 3.

Materials adopted for the actual realization of the invention, as well as their shapes and sizes, can be various, depending on the requirements.

## Claims

1. Transport device in apparatuses for grading fruit and vegetable products, of the type comprising a conveyor (1) developed along a basically horizontal direction and equipped with haul-off units (3) of a plurality of support means (10) of the products (2), arranged regularly spaced in mutually adjacent positions and suited to convey the same products (2) at a quality control station (C) through near infrared spectrography, whereby each support means (10) consists of a cup-shaped rest member (11) which has a central cavity (12) for containing an individual product (2), and has at the bottom a feed-through opening (20) arranged vertically aligned with a corresponding void (7) defined by the haul-off units (3), in order to allow the direct passage of a light beam that passes through transmittance said individual product (2) arranged resting in said central cavity (12) of the cup-shaped rest member (11) in correspondence with the said quality control station (C), said light beam being emitted by at least one light source (5) arranged above said conveyor (1) and detected by the sensors (6) arranged below said conveyor (1) at the said quality control station (C), **characterized in that** said feed-though opening (20) consists of a slot with elongated shape according to the longitudinal axis of said cup-shaped rest member (11).

2. Device according to claim 1, **characterized in that** said void (7) is defined between two contiguous chain links forming the said haul-off units (3).

3. Device according to claim 2, **characterized in that** said haul-off unit chain (3) is arranged in position longitudinally median to said support means (10).

4. Device according to claim 1, **characterized in that** said central cavity (12) of the cup-shaped rest member (11) is equipped with an elastic seal, suited to keep tightness on said individual product (2) placed resting in said central cavity (12), avoiding that said light beam being emitted by said at least one light source (5) can seep between the product (2) itself and the cup-shaped rest member (11).

5. Device according to claim 4, **characterized in that** said seal is developed in annular shape around said central cavity (12) of the cup-shaped rest member (11).

## Patentansprüche

1. Fördereinrichtung in Apparaten für die Klassifizierung von Obst- und Gemüseprodukten, die ein Förderband (1) umfasst, das sich in einer im Wesentlichen waagrechten Richtung ausdehnt und mit Antriebsmitteln (3) von einer Vielzahl von Tragmitteln (10) für die Produkte (2) versehen ist, die in regelmäßigen Abständen nebeneinander angeordnet und geeignet sind, die Produkte (2) auf Höhe einer Station (C) für die Qualitätskontrolle mittels Nahinfrarotspektroskopie zu führen, wobei jede Tragvorrichtung (10) aus einem becherförmigen Auflageelement (11) besteht, das eine mittlere Aushöhlung (12) für die Aufnahme eines einzelnen Produkts (2) aufweist und am Boden eine Durchgangsöffnung (20) aufweist, die vertikal mit einem entsprechenden Raum (7) gefluchtet ist, der von den Antriebsmitteln (3) derart definiert wird, dass der direkte Durchgang eines Lichtbündels möglich ist, das dieses einzelne Produkt (2) durch Transmission durchquert, das in der mittleren Aushöhlung (12) des becherförmigen Auflageelements (11) auf Höhe der Station (C) für die Qualitätskontrolle aufliegend angeordnet ist, wobei dieses Lichtbündel von mindestens einer Lichtquelle (5), die sich über dem Förderband (1) befindet, emittiert und von Sensormitteln (6) erfasst wird, die sich auf Höhe der Station (C) für die Qualitätskontrolle unter dem Förderband (1) befinden, **dadurch gekennzeichnet, dass** diese Durchgangsöffnung (20) aus einem Langloch mit einer in Richtung der Längsachse des becherförmigen Auflageelements (11) verlängerten Form besteht.

2. Einrichtung nach Anspruch 1, **dadurch gekennzeichnet, dass** der Raum (7) von zwei angrenzenden Gliedern einer Kette definiert wird, welche die Antriebsmittel (3) realisiert.

3. Einrichtung nach Anspruch 2, **dadurch gekennzeichnet, dass** die Kette der Antriebsmittel (3) in einer longitudinal mittigen Position zu den Tragvorrichtungen (10) angeordnet ist.

4. Einrichtung nach Anspruch 1, **dadurch gekennzeichnet, dass** die mittlere Aushöhlung (12) des becherförmigen Auflageelements (11) von einer Dichtung aus einem elastischen Material betroffen ist, die geeignet ist, eine Abdichtung auf dem einzelnen Produkt (2), das sich in Auflage in der mittleren Aushöhlung (12) befindet, zu realisieren und zu verhindern, dass das von der mindestens einen Lichtquelle (5) emittierte Lichtbündel zwischen das Produkt (2) und das becherförmige Auflageelement (11) eindringen kann.

5. Einrichtung nach Anspruch 4, **dadurch gekennzeichnet, dass** die sich die Dichtung ringförmig um den mittleren Hohlraum (12) des becherförmigen Auflageelements (11) ausdehnt.

## Revendications

1. Dispositif de transport dans des appareils pour le triage de fruits et légumes, du comprenant un tapis roulant (1) développé selon une direction essentiellement horizontale et équipé de groupes tireurs (3) d'une pluralité de moyens de support (10) des produits (2), disposés régulièrement espacés à des positions mutuellement adjacentes et propres à transporter les mêmes produits (2) au niveau d'une station (C) de contrôle de qualité par spectrographie à proche infrarouge, dans lequel chaque moyen de transport (10) consiste en un organe d'appui à tasse (11) qui présente une cavité centrale (12) pour contenir un produit (2) individuel, et présente sur le fond une ouverture débouchant (20) disposée verticalement alignée avec un espace (7) correspondant défini par les groupes tireurs (3), pour permettre le passage direct d'un faisceau de lumière qui traverse par transmittance ledit produit (2) individuel disposé en appui dans ladite cavité centrale (12) de l'organe d'appui à tasse (11) au niveau de ladite station (C) de contrôle de qualité, ledit faisceau de lumière étant émis par au moins une source lumineuse (5) disposée au dessus dudit tapis roulant (1) et détecté par des capteurs (6) disposés en dessous dudit tapis roulant (1) au niveau de ladite station (C) de contrôle de qualité, **caractérisé en ce que** ladite ouverture débouchant (20) consiste en une fente de forme allongée selon l'axe longitudinal dudit organe d'appui à tasse (11).

2. Dispositif selon la revendication 1, **caractérisé en ce que** ledit espace (7) est défini entre deux maillons de chaîne contigus formant les groupes tireurs (3).

3. Dispositif selon la revendication 2, **caractérisé en ce que** ladite chaîne de groupes tireurs (3) est disposée en position longitudinalement médiane auxdits moyens de support (10).

4. Dispositif selon la revendication 1, **caractérisé en ce que** ladite cavité centrale (12) de l'organe d'appui à tasse (11) est équipé d'un joint élastique, propre à maintenir l'étanchéité sur ledit produit (2) individuel placé en appui dans ladite cavité centrale (12), évitant que ledit faisceau de lumière étant émis par ladite au moins une source lumineuse (5) puisse s'infiltrer entre le produit (2) lui-même et l'organe d'appui à tasse (11).

5. Dispositif selon la revendication 4, **caractérisé en ce que** ledit joint est développé en forme annulaire autour ladite cavité centrale (12) de l'organe d'appui à tasse (11).
